# EUROPEAN PATENT SPECIFICATION

(11) **EP 1 309 666 B1**
(45) Date of publication and mention of the grant of the patent: **26.10.2005**
(21) Application number: 01952052.7
(22) Date of filing: 09.07.2001
(51) Int. Cl.: C09J 175/16, C08L 75/16

(54) **ADHESIVE COMPOSITION FOR OPTICAL DISKS**
KLEBSTOFFZUSAMMENSETZUNG FÜR OPTISCHE PLATTEN
COMPOSITION ADHESIVE POUR DISQUES OPTIQUES

(30) Priority: 15.08.2000 JP 2000024677
(43) Date of publication of application: 14.05.2003
(73) Proprietor: DSM IP Assets B.V., 6411 TE Heerlen (NL); JSR Corporation, Tokyo 104-0045 (JP)
(72) Inventor: TAKAHASHI, Atsuya, Tsuchiura-shi, Ibaraki 300-0033 (JP); UKON, Masakatsu, Tsukuba , Ibaraki (JP); UKACHI, Takashi, Ibaraki 300-216 (JP); TANABE, Takayoshi, Tsukuba 305-0045 305 (JP)
(74) Representative: Habets, Winand
(86) International application number: PCT/NL2001/000523
(87) International publication number: WO 2002/014449

(56) References cited:
- EP-A- 0 768 353
- DE-A- 19 841 205
- US-A- 6 010 956

## Description

### Field of the Invention

The present invention relates to photocurable compositions. In addition, the present invention relates to the use of the compositions as adhesives for optical disks.

### Background

Recent progress in information technology represented by computer technology, computer software technology, and communication technology has enabled much more information to be transmitted at high speed. Accompanied by this, recording media capable of recording more information at high density have been demanded and developed. As such high-density recording media, a DVD (digital videodisc or digital versatile disk) has been developed as a general-purpose recording medium of the next generation. A DVD is generally manufactured by attaching two disks together, thereby requiring an adhesive to cause the two disks to adhere. Examples of conventional adhesives include hot-melt adhesives, heat-curable adhesives, anaerobic curable adhesives. However, these conventional adhesives have a variety of disadvantages. For instance, hot-melt adhesives have poor heat stability and weatherability and therefore soften at high temperature, causing the disks to be separated or deformed due to decreased adhesion. Moreover, it is difficult to apply a hot-melt adhesive to a two-layer DVD having a semi-transmission film as a recording film because of the poor transparency of the hot-melt adhesive. A problem with a heat-curable adhesive is that substrates forming the disks are deformed by heat during curing. In the alternatives, if lower temperatures are used, curing the adhesive requires a long period of time. An anaerobic curable adhesive exhibits inferior productivity because a long period pf time is required for curing the adhesive. Photocurable adhesives have been proposed to solve these problems. For example, Japanese Patent Applications Laid-open No. 142545/1986 and No. 89462/1994 disclose UV-curable resin adhesives containing a urethane acrylate as an essential component. However, these UV-curable resin adhesives are unsatisfactory in view of curability at the edge of the disks, adhesion to gold for forming a half-transmission film, moisture-heat resistance, and the like. Accordingly, an object of the present invention is to provide a UV-curableresin composition for optical disks having improved curability at the edge of the disks.

In addition, it is an objective to provide a resin composition having improved adhesion to gold or the like.

Furthermore, it is an objective of the present invention to provide a composition having improved moisture-heat resistance in comparison with conventional adhesives.

### Summary of the Invention

As a result of extensive studies, the present inventors have found that above objectives can be achieved by combining a radiation-curable oligomer with the following component (B) and/or (C) and (D).

Accordingly, the present invention provides a composition comprising
(A) a radiation-curable oligomer, preferably a urethane (meth)acrylate oligomer produced by reacting a polyol compound, a polyisocyanate compound, and a (meth)acrylate compound containing a hydroxyl group; and
(B) a dialkylaminobenzoate.

In addition, the present invention provides a composition comprising
(A) a radiation-curable oligomer, preferably a urethane (meth)acrylate oligomer produced by reacting a polyol compound, a polyisocyanate compound, and a (meth)acrylate compound containing a hydroxyl group;
(C) a hydroxyalkyl (meth)acrylate; and
(D) at least one compound selected from the group consisting of 2,2-dimethoxy-1,2-diphenylethan-1-one, 2-hydroxy-2-methyl-1-phenylpropan-1-one, and 1-hydroxycyclohexyl phenyl ketone.

Preferably the compositions of the present invention comprise all four components (A)-(D).

The present invention further provides the use of the compositions as adhesives for optical discs, for instance digital versatile discs.

Also, the present invention provides optical discs, for instance digital versatile discs, comprising an adhesive obtainable by curing the present compositions.

### Detailed Description of the Invention

The oligomer used as the component (A) may be any suitable radiation-curable oligomer, for instance a (meth)acrylate oligomer. Preferably component (A) is a urethane (meth)acrylate oligomer, which is obtainable by reacting a polyol compound, a polyisocyanate compound, and a (meth)acrylate compound containing a hydroxyl group.

As the polyol compound, polyether polyols, polyester polyols, polycarbonate polyols, polycaprolactone polyols, aliphatic hydrocarbons having two or more hydroxyl groups in the molecule, alicyclic hydrocarbons having two or more hydroxyl groups in the molecule, unsaturated hydrocarbons having two or more hydroxyl groups in the molecule, and the like can be used. These polyols may be used either individually or in combination of two or more.

As examples of polyether polyols, aliphatic polyether polyols, alicyclic polyether polyols, and aromatic polyether polyols can be given.

Given as examples of aliphatic polyether polyols are polyethylene glycol, polypropylene glycol, polytetramethylene glycol, polyhexamethylene glycol, polyheptamethylene glycol, polydecamethylene glycol, pentaerythritol, dipentaerythritol, trimethylolpropane; polyhydric alcohols such as alkylene oxide addition polyols such as ethylene oxide addition triol of trimethylolpropane, propylene oxide addition triol of trimethylolpropane, ethylene oxide/propylene oxide addition triol of trimethylolpropane, ethylene oxide addition tetraol of pentaerythritol, and ethylene oxide addition hexaol of dipentaerythritol; polyether polyols obtained by the ring-opening polymerization of two or more ion-polymerizable cyclic compounds; and the like.

As examples of ion-polymerizable cyclic compounds, cyclic ethers such as ethylene oxide, propylene oxide, butene-1-oxide, isobutene oxide, 3,3-bis(chloromethyl)oxetane, tetrahydrofuran, 2-methyltetrahydrofuran, dioxane, trioxane, tetraoxane, cyclohexene oxide, styrene oxide, epichlorohydrin, glycidyl ether, allyl glycidyl ether, allyl glycidyl carbonate, butadiene monoxide, isoprene monoxide, vinyl oxetane, vinyl tetrahydrofuran, vinyl cyclohexene oxide, phenyl glycidyl ether, butyl glycidyl ether, and glycidyl benzoate can be given. As specific examples of the combination of two or more ion-polymerizable cyclic compounds, combinations of tetrahydrofuran and ethylene oxide, tetrahydrofuran and propylene oxide, tetrahydrofuran and 2-methyltetrahydrofuran, tetrahydrofuran and 3-methyltetrahydrofuran, ethylene oxide and propylene oxide, butene-1-oxide and ethylene oxide, tetrahydrofuran, butene-1-oxide, and ethylene oxide, and the like can be given.

Polyether polyols obtained by ring-opening copolymerization of these ion-polymerizable cyclic compounds and cyclic imines such as ethyleneimine, cyclic lactonic acids such as β-propyolactone and glycolic acid lactide, or dimethylcyclopolysiloxanes can also be used.

As examples of alicyclic polyether polyols, alkylene oxide addition diols of hydrogenated bisphenol A, alkylene oxide addition diols of hydrogenated bisphenol F, alkylene oxide addition diols of 1,4-cyclohexanediol, and the like can be given.

As examples of aromatic polyether polyols, alkylene oxide addition diols of bisphenol A, alkylene oxide addition diols of bisphenol F, alkylene oxide addition diols of hydroquinone, alkylene oxide addition diols of naphthohydroquinone, alkylene oxide addition diols of anthrahydroquinone, and the like can be given.

As examples of commercially available products of aliphatic polyether polyols, PTMG 650, PTMG 1000, PTMG2000 (manufactured by Mitsubishi Chemical Corp.), PPG 1000, EXCENOL 1020, EXCENOL2020, EXCENOL3020, EXCENOL 4020 (manufactured by Asahi Glass Co., Ltd.), PEG 1000, Unisafe DC 1100, Unisafe DC 1800, Unisafe DCB 1100, Unisafe DCB 1800 (manufactured by Nippon Oil and Fats Co., Ltd.), PPTG 1000, PPTG 2000, PPTG 4000, PTG 400, PTG 650, PTG 2000, PTG 3000, PTGL 1000, PTGL 2000 (manufactured by Hodogaya Chemical Co., Ltd.), PPG 400, PBG 400, Z-3001-4, Z-3001-5, PBG 2000, PBG 2000B (manufactured by Daiichi Kogyo Seiyaku Co., Ltd.), TMP30, PNT4 Glycol, EDA P4, EDA P8 (manufactured by Nippon Nyukazai Co., Ltd.), and Quadrol (manufactured by Asahi Denka Kogyo K.K.) can be given. As examples of commercially available products of aromatic polyether polyols, Uniol DA400, DA700, DA1000, DB400 (manufactured by Nippon Oil and Fats Co., Ltd.), and the like can be given.

Polyester polyols are obtained by reacting a polyhydric alcohol and a polybasic acid. As examples of a polyhydric alcohol, ethylene glycol, polyethylene glycol, propylene glycol, polypropylene glycol, tetramethylene glycol, polytetramethylene glycol, 1,4-butanediol, 1,5-pentanediol, 1,6-hexanediol, 1,7-heptanediol, 1,8-octanediol, neopentyl glycol, 1,4-cyclohexanediol, 1,4-cyclohexanedimethanol, 1,2-bis(hydroxyethyl)cyclohexane, 2,2-diethyl-1,3-propanediol, 3-methyl-1,5-pentanediol, 1,9-nonanediol, 2-methyl-1,8-octanediol, glycerol, trimethylolpropane, ethylene oxide addition product of trimethylolpropane, propylene oxide addition product of trimethylolpropane, ethylene oxide and propylene oxide addition product of trimethylolpropane, sorbitol, pentaerythritol, dipentaerythritol, alkylene oxide addition polyols, and the like can be given. As examples of a polybasic acid, phthalic acid, isophthalic acid, terephthalic acid, maleic acid, fumaric acid, adipic acid, sebacic acid, and the like can be given. As examples of commercially available products of polyester polyols, Kurapol P1010, Kurapol P2010, PMIPA, PKA-A, PKA-A2, PNA-2000 (manufactured by Kuraray Co., Ltd.), and the like can be given.

As examples of polycarbonate polyols, a polycarbonate diol shown by the following formula (1) can be given: 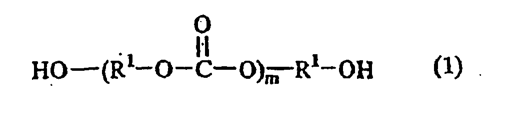 wherein R¹ represents an alkylene group having 2-20 carbon atoms, a (poly)ethylene glycol residue, (poly)propylene glycol residue, or (poly)tetramethylene glycol residue, and m is an integer from 1 to 30.

As specific examples of the groups represented by R¹, residues obtained by removing hydroxyl groups at both terminals from 1,4-butanediol, 1,5-pentanediol, neopentyl glycol, 1,6-hexanediol, 1,4-cyclohexanedimethanol, 1,7-heptanediol, 1,8-octanediol, 1,9-nonanediol, ethylene glycol, diethylene glycol, triethylene glycol, tetraethylene glycol, propylene glycol, dipropylene glycol, tripropylene glycol, tetrapropylene glycol, and the like can be given. As examples of commercially available products of polycarbonate polyols, DN-980, DN-981, DN-982, DN-983 (manufactured by Nippon Polyurethane Industry Co., Ltd.), PC-8000 (manufactured by PPG), PNOC1000, PNOC2000, PMC100, PMC2000 (manufactured by Kuraray Co., Ltd.), PLACCEL CD-205, CD-208, CD-210, CD-220, CD-205PL, CD-208PL, CD-210PL, CD-220PL, CD-205HL, CD-208HL, CD-210HL, CD-220HL, CD-210T, CD-221T (manufactured by Daicel Chemical Industries, Ltd.), and the like can be given.

As examples of polycaprolactone polyols, polycaprolactone diols obtained by the addition reaction of ε-caprolactone and diols such as ethylene glycol, polyethylene glycol, propylene glycol, polypropylene glycol, tetramethylene glycol, polytetramethylene glycol, 1,2-polybutylene glycol, 1,6-hexanediol, neopentyl glycol, 1,4-cyclohexanedimethanol, or 1,4-butanediol can be given. As examples of commercially available products of these polycaprolactone diols, PLACCEL 205, 205AL, 212, 212AL, 220, 220AL (manufactured by Daicel Chemical Industries, Ltd.), and the like can be given.

As examples of aliphatic hydrocarbons having two or more hydroxyl groups in the molecule, ethylene glycol, propylene glycol, tetramethylene glycol, 1,4-butanediol, 1,5-pentanediol, 1,6-hexanediol, 1,7-heptanediol, 1,8-octanediol, 1,9-nonanediol, neopentyl glycol, 2,2-diethyl-1,3-propanediol, 3-methyl-1,5-pentanediol, 2-methyl-1,8-octanediol, hydrogenated polybutadiene having terminal hydroxyl groups, glycerol, trimethylolpropane, pentaerythritol, sorbitol, and the like can be given.

As examples of alicyclic hydrocarbons having two or more hydroxyl groups in the molecule, 1,4-cyclohexanediol, 1,4-cyclohexanedimethanol, 1,2-bis(hydroxyethyl)cyclohexane, dimethylol compounds of dicyclopentadiene, tricyclodecanedimethanol, and the like can be given.

As examples of unsaturated hydrocarbons having two or more hydroxyl groups in the molecule, polybutadiene having terminal hydroxyl groups, polyisoprene having terminal hydroxyl groups, and the like can be given.

As examples of polyols other than the above polyols, β-methyl-δ-valerolactonediol, castor oil-modified diol, terminal diol compound of polydimethylsiloxane, polydimethylsiloxanecarbitol-modified diol, and the like can be given.

The polystyrene-reduced number average molecular weight of these polyols determined by the gel permeation chromatography (GPC) is preferably 50-15,000, and particularly preferably 250-800.

As the polyisocyanate compound, diisocyanate compounds are preferable. As examples of diisocyanate compounds, 2,4-tolylene diisocyanate, 2,6-tolylene diisocyanate, 1,3-xylylene diisocyanate, 1,4-xylylene diisocyanate, 1,5-naphthatene diisocyanate, m-phenylene diisocyanate, p-phenylene diisocyanate, 3,3'-dimethyl-4,4'-diphenylmethane diisocyanate, 4,4'-diphenylmethane diisocyanate, 3,3'-dimethylphenylene diisocyanate, 4,4'-biphenylene diisocyanate, 1,6-hexane diisocyanate, isophorone diisocyanate, 2,2,4-trimethylhexamethylene diisocyanate, bis(2-isocyanateethyl)fumarate, 6-isopropyl-1,3-phenyl diisocyanate, 4-diphenylpropane diisocyanate, lysine diisocyanate, hydrogenated diphenylmethane diisocyanate, hydrogenated xylylene diisocyanate, tetramethyl xylylene diisocyanate, and the like are given. Of these, 2,4-tolylene diisocyanate, 2,6-tolylene diisocyanate, hydrogenated xylylene diisocyanate, isophorone diisocyanate, hydrogenated diphenylmethane diisocyanate, and the like are particular preferable. These diisocyanates may be used either individually or in combination of two or more.

The (meth)acrylate containing a hydroxyl group has a hydroxyl group in the ester residue. 2-Hydroxyethyl (meth)acrylate, 2-hydroxypropyl (meth)acrylate,
4-hydroxybutyl (meth)acrylate, 2-hydroxy-3-phenyloxypropyl (meth)acrylate, 1,4-butanediol mono(meth)acrylate, 2-hydroxyalkyl (meth)acryloyl phosphate, 4-hydroxycyclohexyl (meth)acrylate, 1,6-hexanediol mono(meth)acrylate, neopentyl glycol mono(meth)acrylate, trimethylolpropane di(meth)acrylate, trimethylolethane di(meth)acrylate, pentaerythritol tri(meth)acrylate, dipentaerythritol penta(meth)acrylate, (meth)acrylates shown by the following formula (2), and the like can be given as examples: 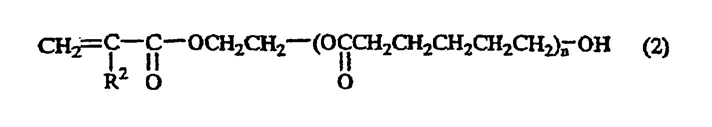 wherein, R² represents a hydrogen atom or a methyl group, and n is an an integer from 1 to 15, and preferably from 1 to 4. In addition, compounds obtained by the addition reaction of a compound containing a glycidyl group, such as alkyl glycidyl ether, allyl glycidyl ether, or glycidyl (meth)acrylate, and (meth)acrylic acid can also be given. Of these, a hydroxyalkyl (meth)acrylate such as 2-hydroxyethyl (meth)acrylate,
2-hydroxypropyl (meth)acrylate, and 4-hydroxybutyl (meth)acrylate is particularly preferable.

There are no specific limitations to the method of synthesizing the urethane (meth)acrylate. For example, the following methods (i) to (iii) can be employed.
(i) A method of reacting the polyisocyanate with the (meth)acrylate containing a hydroxyl group, and reacting the resulting product with the polyol.
(ii) A method of reacting the polyol, polyisocyanate, and (meth)acrylate containing a hydroxyl group all together.
(iii) A method of reacting the polyol with the polyisocyanate, and reacting the resulting product with the (meth)acrylate containing a hydroxyl group.

It is preferable to synthesize the urethane (meth)acrylate used in the present invention using a urethanization catalyst such as copper naphthenate, cobalt naphthenate, zinc naphthenate, di-n-butyltin dilaurate, triethylamine, 1,4-diazabicyclo[2.2.2]octane, or 1,4-diaza-2-methylbicyclo[2.2.2]octane in an amount of 0.01-1 part by weight for 100 parts by weight of the reaction product. The reaction is usually carried out at a temperature from 0 to 90°C, and preferably from 10 to 80°C.

The number average molecular weight of the urethane (meth)acrylate used in the present invention is preferably 400-20,000, and particularly preferably 700-5,000.

The proportion of the urethane (meth)acrylate in the present composition is, relatively to the total weight of the composition, preferably 20-80 wt% in view of adhesion to substrates and viscosity of the composition.

Examples of the component (B) used in the present invention include alkyl esters (methyl ester, ethyl ester, propyl ester, butyl ester, isoamyl ester, etc.) of dialkylaminobenzoic acid (alkyl dialkylaminobenzoate) . Preferred alkyl groups for the dialkylamino group include alkyl groups having 1-6 carbon atoms. As the ester residue, alkyl groups having 1-6 carbon atoms are preferable. The dialkylamino group and carboxylate group preferably bond to the benzene ring at a p-position. When curing the composition placed between two disks, the component (B) prevents tackiness and improves curability at the edge of the disks. Of these, ethyl p-dimethylaminobenzoate is preferable.

As examples of commercially available products used as the component (B), KAYACURE EPA, KAYACURE DMBI (manufactured by Nippon Kayaku Co., Ltd.), and the like can be given.

The proportion of component (B) in the present compositions is, relative to the total weight of the composition, preferably 0.05-5 wt%, still more preferably 0.1-3 wt%, and particularly preferably 0.2-1 wt% in view of edge curability and moisture-heat resistance.

Examples of the component (C) used in the present invention include hydroxy C₁-C₆ alkyl (meth)acrylates, for instance 2-hydroxyethyl (meth)acrylate, 2-hydroxypropyl (meth)acrylate, and 4-hydroxybutyl (meth)acrylate The component (C) improves moisture-heat resistance. Of these, 4-hydroxybutyl , (meth)acrylate is preferable.

As examples of commercially available products used as the component (C), HEA, HPA, 4HBA (manufactured by Osaka Organic Chemical Industry Co., Ltd.), Light Ester HOA, Light Ester HOP-A, Light Ester HO, Light Ester HOP, Light Ester HOB (manufactured by Kyoeisha Chemical Co., Ltd.), and the like can be given.

The proportion of the hydroxyalkyl (meth)acrylate used as the component (C) is, relative to the total weight of the composition, preferably 5-70 wt%, and still more preferably 10-50 wt% in order to improve moisture-heat resistance.

The component (D), which is a photoinitiator, is at least one compound selected from the group consisting of 2,2-dimethoxy-1,2-diphenylethan-1-one, 2-hydroxy-2-methyl-1-phenylpropan-1-one, and 1-hydroxycyclohexyl phenyl ketone. It is preferable to use 2,2-dimethoxy-1,2-diphenylethan-1-one and 2-hydroxy-2-methyl-1-phenylpropan-1-one in combination. The proportion of the component (D) in the present compositions is, relative to the total weight of the composition, preferably 0.01-15 wt%, and still more preferably 0.1-10 wt% in view of moisture-heat resistance and curability.

As examples of commercially available products used as the component (D), Irgacure 184,500, 651, Darocur 1173, 4265 (manufactured by Ciba Specialty Chemicals Co., Ltd.), and the like can be given.

It is preferable to add a thiol compound containing a methoxysilyl group to the adhesive composition for optical disks of the present invention as the component (E) in order to improve adhesion to gold. As examples of such a thiol compound containing a methoxysilyl group, mercaptoalkylmono-, di-, and tri-methoxysilanes such as γ-mercaptopropyltrimethoxysilane, γ-mercaptopropylmethylmonomethoxysilane, and γ-mercaptopropylmethyldimethoxysilane can be given. If component (E) is used, its proportion in the present compositions is preferably, relative to the total weight of the composition, 0.1-5 wt%, and still more preferably 0.3-3 wt% in view of adhesion to gold and moisture-heat resistance.

Examples of commercially available products that may be used as the component (E) include SH6062, AY43-062 (manufactured by Toray-Dow Coming Silicone Co., Ltd.), Sila-Ace S810 (manufactured by Chisso Corp.), and KBM803 (manufactured by Shin-Etsu Chemical Co., Ltd.).

A (meth)acrylate compound containing at least one (meth)acryloyl group in the molecule other than the component (C) may be added to the composition of the present invention. Any of monofunctional compounds containing one (meth)acryloyl group and polyfunctional compounds containing two or more (meth)acryloyl groups may be used. These compounds may be used in combination at an appropriate proportion.

Examples of the above monofunctional compounds include methyl (meth)acrylate, ethyl (meth)acrylate, propyl (meth)acrylate, isopropyl (meth)acrylate, butyl (meth)acrylate, amyl (meth)acrylate, isobutyl (meth)acrylate, t-butyl (meth)acrylate, pentyl (meth)acrylate, isoamyl (meth)acrylate, hexyl (meth)acrylate, heptyl (meth)acrylate, octyl (meth)acrylate, isooctyl (meth)acrylate, 2-ethylhexyl (meth)acrylate, nonyl (meth)acrylate, decyl (meth)acrylate, isodecyl (meth)acrylate, undecyl (meth)acrylate, dodecyl (meth)acrylate, lauryl (meth)acrylate, octadecyl (meth)acrylate, stearyl (meth)acrylate, tetrahydrofurfuryl (meth)acrylate, butoxyethyl (meth)acrylate, ethoxydiethylene glycol (meth)acrylate, benzyl (meth)acrylate, cyclohexyl (meth)acrylate, phenoxyethyl (meth)acrylate, polyethylene glycol mono(meth)acrylate, polypropylene glycol mono(meth)acrylate, methoxyethylene glycol mono(meth)acrylate, ethoxyethyl (meth)acrylate, ethoxyethoxyethyl (meth)acrylate, methoxypolyethylene glycol (meth)acrylate, methoxypolypropylene glycol (meth)acrylate, dicyclopentadienyl (meth)acrylate, dicyclopentanyl (meth)acrylate, dicyclopentenyl (meth)acrylate, tricyclodecanyl (meth)acrylate, bomyl (meth)acrylate, isobomyl (meth)acrylate, adamantyl (meth)acrylate, dimethylaminoethyl (meth)acrylate, diethylaminoethyl (meth)acrylate, 7-amino-3,7-dimethyloctyl (meth)acrylate, (meth)acryloyl morpholine, 2-(meth)acryloyloxyethylphthalic acid, 2-(meth)acryloyloxyethylhexahydrophthalic acid, 2-(meth)acryloyloxypropylphthalic acid, 2-(meth)acryloyloxypropyltetrahydrophthalic acid, 2-(meth)acryloyloxypropylhexahydrophthalic acid, 2-(meth)acryloyloxyethylsuccinic acid, trifluoroethyl (meth)acrylate, tetrafluoropropyl (meth)acrylate, hexafluoropropyl (meth)acrylate, octafluoropentyl (meth)acrylate, heptadecafluorodecyl (meth)acrylate, mono[2-(meth)acryloyloxyethyl]phosphate, mono[2-(meth)acryloytoxyethyl]diphenylphosphate, mono[2-(meth)acryloyloxypropyl]phosphate, and compounds shown by the following formulas (3) to (5): 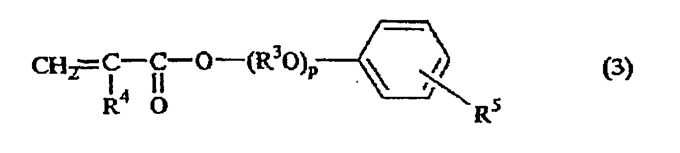 wherein R³ represents an alkylene group or a hydroxyalkylene group having 2-6 carbon atoms, R⁴ represents a hydrogen atom or a methyl group, R⁵ represents a hydrogen atom or an alkyl group having 1-12 carbon atoms, and p is an integer from 0 to 20; 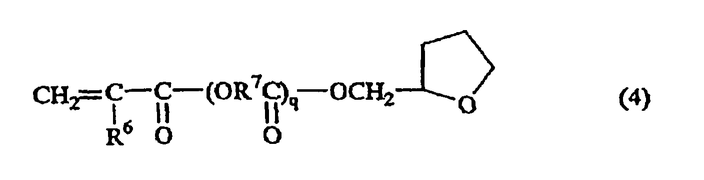 wherein R⁶ represents a hydrogen atom or a methyl group, R⁷ represents an alkylene group having 2-8 carbon atoms, and q is an integer from 0 to 8; 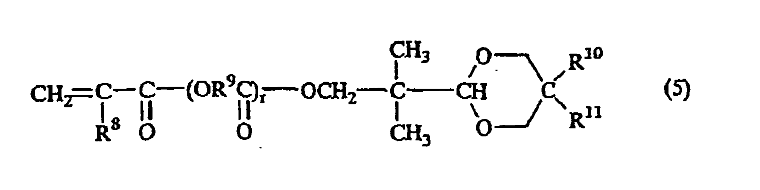 wherein, R⁸ represents a hydrogen atom or a methyl group, R⁹ represents an alkylene group having 2-8 carbon atoms, r is an integer from 0 to 8, and R¹⁰ and R¹¹ represent a hydrogen atom or an alkyl group having 1-6 carbon atoms.

Examples of commercially available products of these monofunctional compounds include Aronix M101, M102, M110, M111, M113, M114, M117, M120, M152, M154, M5300, M5400, M5500, M5600 (manufactured by Toagosei Co., Ltd.), KAYARAD TC-110S, R-128H, R629, R644 (manufactured by Nippon Kayaku Co., Ltd.), IPAA, AIB, SBAA, TBA, IAAA, HEXA, CHA, NOAA, IOAA, INAA, LA, TDA, MSAA, CAA, HDAA, LTA, STA, ISAA-1, ODAA, NDAA, IBXA, ADAA, TCDA, 2-MTA, DMA, Viscoat #150, #150D, #155, #158, #160, #190, #190D, #192, #193, #220, #320, #2311HP, #2000, #2100, #2150, #2180, MTG (manufactured by Osaka Organic Chemical Industry Co., Ltd.), NK Ester M-20G, M-40G, M-90G, M-230G, CB-1, SA, S, AMP-10G, AMP-20G, AMP-60G, AMP-90G, A-SA, NLA (manufactured by Shin-Nakamura Chemical Co., Ltd.), ACMO (manufactured by Kojin Co., Ltd.), Light Acrylate IA-A, L-A, S-A, BO-A, EC-A, MTG-A, DPM-A, PO-A, P-200A, THF-A, IB-XA, HOA-MS, HOA-MPL, HOA-MPE, HOA-HH, IO-A, BZ-A, NP-EA, NP-10EA, HOB-A, FA-108, Epoxy Ester M-600A, Light Ester P-M (manufactured by Kyoeisha Chemical Co., Ltd.), FA-511, FA-512A, FA-513A (manufactured by Hitachi Chemical Co., Ltd.), AR-100, MR-100, MR-200, MR-260 (manufactured by Daihachi Chemical Co., Ltd.), JAMP-100, JAMP-514, JPA-514 (manufactured by Johoku Chemical Co., Ltd.), and the like.

Examples of the above polyfunctional compound include ethylene glycol di(meth)acrylate, propylene glycol di(meth)acrylate, 1,4-butanediol di(meth)acrylate,
1,6-hexanediol di(meth)acrylate, 1,9-nonanediol di(meth)acrylate, diethylene glycol di(meth)acrylate, triethylene glycol di(meth)acrylate, tetraethylene glycol di(meth)acrylate, polyethylene glycol di(meth)acrylate, dipropylene glycol di(meth)acrylate, tripropylene glycol di(meth)acrylate, polypropylene glycol di(meth)acrylate, neopentyl glycol di(meth)acrylate, hydroxypivalic acid neopentyl glycol di(meth)acrylate, trimethylolpropane tri(meth)acrylate, pentaerythritol tri(meth)acrylate, pentaerythritol tetra(meth)acrylate, ditrimethylolpropane tetra(meth)acrylate, dipentaerythritol penta(meth)acrylate, dipentaerythritol hexa(meth)acrylate, trimethylolpropanetrioxyethyl (meth)acrylate, trimethylolpropanepolyoxyethyl (meth)acrylate, trimethylolpropanetrioxypropyl (meth)acrylate, trimethylolpropanepolyoxyethyl (meth)acrylate, tris(2-hydroxyethyl)isocyanurate di(meth)acrylate, tris(2-hydroxyethyl)isocyanurate tri(meth)acrylate, ethylene oxide addition bisphenol A di(meth)acrylate, ethylene oxide addition bisphenol F di(meth)acrylate, propylene oxide addition bisphenol A di(meth)acrylate, propylene oxide addition bisphenol F di(meth)acrylate, tricyclodecanedimethanol di(meth)acrylate, bisphenol A diepoxy di(meth)acrylate, bisphenol F diepoxy di(meth)acrylate, bis[2-(meth)acryloyl oxyethyl]phosphates, bis[2-(meth)acryloyloxypropyl]phosphate, tris[2-(meth)acryloyloxyethyl]phosphate, and the like.

Examples of commercially available products of these polyfunctional compounds include SA-1002, SA-2006, SA-2007, SA-4100, SA-5001, SA-6000, SA-7600, SA-8000, SA-9000 (manufactured by Mitsubishi Chemical Corp.), Viscoat #195, #195D, #214HP, #215, #215D, #230, #230D, #260, #295, #295D, #300, #310HP, #310HG, #312, #335HP, #335D, #360, GPT, #400, #540, #700, GPT, Viscoat 3PA (manufactured by Osaka Organic Chemical Industry Co., Ltd.), KAYARAD MANDA, R-526, NPGDA, PEG400DA, R-167, HX-220, HX-620, R-551, R-712, R-604, R-684, GPO-303, TMPTA, THE-330, TPA-320, TPA-330, PET-30, RP-1040, T-1420, DPHA, D-310, D-330, DPCA-20, DPCA-30, DPCA-60, DPCA-120 (manufactured by Nippon Kayaku Co., Ltd.), Aronix M-210, M-208, M-215, M-220, M-225, M-233, M-240, M-245, M-260, M-270, M-305, M-309, M-310, M-315, M-320, M-350, M-360, M-400, M-408, M-450 (manufactured by Toagosei Co., Ltd.), SR-212, SR-213, SR-355 (manufactured by Sartomer Co., Ltd.), SP-1506, SP-1507, SP-1509, SP-1519-1, SP-1563, SP-2500, VR60, VR77, VR90 (manufactured by Showa Highpolymer Co., Ltd.), Light Ester P-2M (manufactured by Kyoeisha Chemical Co., Ltd.), EB-169, EB-179, EB-3603, R-DX63182 (manufactured by Daicel-UCB Co., Ltd.), and the like.

Photoinitiators other than the component (D) may be added to the composition of the present invention. Examples of such other photoinitiators include 3-methylacetophenone, 2,2-dimethoxy-2-phenylacetophenone, xanthone, fluorenone, benzaldehyde, fluorene, anthraquinone, triphenylamine, carbazole, 3-methylacetophenone, benzophenone, 4-chlorobenzophenone, 4,4'-dimethoxybenzophenone, 4,4'-diaminobenzophenone, benzoin ethyl ether, benzoin propyl ether, Michiler's ketone, benzyl dimethyl ketal, 1-(4-isopropylphenyl)-2-hydroxy-2-methylpropan-1-one, 1-(4-dodecylphenyl)-2-hydroxy-2-methylpropan-1-one, 4-(2-hydroxyethoxy)phenyl-(2-hydroxy-2-propyl) ketone, 2-methyl-1-[4-(methylthio)phenyl]-2-morpholino-propan-1-one, 2,4,6-trimethylbenzoylphenylphosphinate, 2,4,6-trimethylbenzoyldiphenylphosphine oxide, 2-benzyl-2-dimethylamino-1-(4-morpholinophenyl)-butan-1-one, bis(2,6-dimethoxybenzoyl)-2,4,4-trimethylpentylphosphine oxide, methyl benzoyl formate, thioxanethone, diethylthioxanthone, 2-isopropylthioxanthone, 2-chlorothioxanthone, and oligo[2-hydroxy-2-methyl-1-[4-(1-methylvinyl)phenyl]propanone. These compounds can be used to increase the surface curability and the cure speed of the composition. If used in combination with compound (D), these other photoinitiators are preferably present, relative to the total weight of said other photoinitiators and compound (D) combined, in amounts up to 70 wt%.

Examples of commercially available products of these other photoinitiators include IRGACURE 261, 369, 907, 819, 1700, 1800, 1850, 2959, CGI-403, Darocur 953, 1116, 1664, 2273 (manufactured by Ciba Specialty Chemicals Co., Ltd.), Lucirin TPO, LR8728, LR8893 (manufactured by BASF), Ubecryl P36 (manufactured by UCB), VICURE55 (manufactured by Akzo), ESACURE KIP100F, KIP150 (manufactured by Lamberti), KAYACURE CTX, DETX, BP-100, BMS, and 2-EAQ (manufactured by Nippon Kayaku Co., Ltd.).

Silane coupling agents other than the component (E) may be added to the composition of the present invention. Examples of silane coupling agents include γ-mercaptopropylmethylmonoethoxysilane, γ-mercaptopropyldiethoxysilane, γ-mercaptopropyttriethoxysilane, β-mercaptoethylmonoethoxysilane, β-mercaptoethyltriethoxysilane, N-(2-aminoethyl)-3-aminopropylmethyldimethoxysilane, N-(2-aminoethyl)-3-aminopropyltrimethoxysilane, γ-aminopropyltriethoxysilane, γ-glycidoxylpropyltrimethoxysilane, γ-glycidoxylpropylmethyldimethoxysilane, 2-(3,4-epoxycyclohexyl)ethyltrimethoxysilane, γ-chloropropylmethyldimethoxysilane, γ-chloropropyltrimethoxysilane, and γ-methacryloyloxypropyltrimethoxysilane. Examples of commercially available products of these silane coupling agents include Sila-Ace S310, S311, S320, S321, S330, S510, S520, S530, S610, S620, S710 (manufactured by Chisso Corp.), SH6060, SZ6023, SZ6030, SH6040, SH6076, SZ6083 (manufactured by Toray-Dow Coming Silicone Co., Ltd.), KBM403, KBM503, KBM602, KBM603, KBE903 (manufactured by Shin-Etsu Chemical Industries Co., Ltd.).

Radically polymerizable compounds other than compounds containing an acrylic group may be added to the composition of the present invention. Examples of such compounds include N-vinylpyrrolidone, N-vinylcaprolactam, vinyl acetate, vinyl propionate, styrene, divinylbenzene, and unsaturated polyester. The above unsaturated polyester includes esters of dicarboxylic acids having a radically polymerizable unsaturated double bond and alcohols. Examples of dicarboxylic acids having a radically polymerizable unsaturated double bond include maleic anhydride, itaconic acid, and fumaric acid. Examples of alcohols include monohydric alcohols, for instance methanol, ethanol, n-propyl alcohol, isopropyl alcohol, n-butyl alcohol, isobutyl alcohol, sec-butyl alcohol, tert-butyl alcohol, n-hexanol, cyclohexanol, and 2-ethylhexyl alcohol; (poly)ethylene glycols such as ethylene glycol, diethylene glycol, and triethylene glycol; (poly)propylene glycols such as propylene glycol, dipropylene glycol, and tripropylene glycol; dihydric alcohols such as 1,6-hexanediol; and trihydric alcohols such as glycerol and trimethylolpropane.

Moreover, epoxy resins, polyamides, polyamideimides, plyurethanes, polybutadienes, chloroprenes, polyethers, polyesters, pentadiene derivatives, SBS (styrene/butadiene/styrene block copolymer), hydrogenated SBS, SIS (styrene/isoprene/styrene block copolymer), petroleum resins, xylene resins, ketone resins, fluorine-containing oligomers, silicone-type oligomers, polysulfide-type oligomers, and the like may be added to the composition of the present invention as other additives.

Also, paint additives such as antioxidants, UV absorbers, light stabilizers, aging preventives, anti-foaming agents, leveling agents, antistatic agents, surfactants, preservatives, heat-polymerization inhibitors, plasticizers, and wettability improvers may be added to the composition of the present invention. Examples of antioxidants include Irganox 245, 259, 565, 1010, 1035, 1076, 1081, 1098, 1222, and 1330 (manufactured by Ciba Specialty Chemicals Co., Ltd.).

Examples of UV absorbers include benzotriaole-type and triazine-type UV absorbers. Commercially available products of these UV absorbers include Tinuvin P, 234, 320, 326, 327, 328, 213, 400 (manufactured by Ciba Specialty Chemicals Co., Ltd.), Sumisorb 110, 130, 140, 220, 250, 300, 320, 340, 350, and 400 (manufactured by Sumitomo Chemical Industries Co., Ltd.).

Examples of light stabilizers include Tinuvin 144, 292, 622LD (manufactured by Ciba Specialty Chemicals Co., Ltd.) Sanol LS440, LS770 (manufactured by Sankyo Co., Ltd.), and Sumisorb TM-061 (manufactured by Sumitomo Chemical Industries Co., Ltd.).

Examples of aging preventives include phenol-type aging preventives, allylamine-type aging preventives, and ketone amine-type aging preventives. Commercially available products of these aging preventives include Antigene W, S, P, 3C, 6C, RD-G, FR, and AW (manufactured by Sumitomo Chemical Industries Co., Ltd.).

Examples of anti-foaming agents include organic copolymers which do not contain a silicon atom or a fluorine atom such as Flowlen AC-202, AC-300, AC-303, AC-326F, AC-900, AC-1190, AC-2000 (manufactured by Kyoeisha Chemical Co., Ltd.), anti-foaming agents containing a silicon atom such as Flowlen AC-901, AC-950, AC-1140, AO-3, AO-4OH (manufactured by Kyoeisha Chemical Co., Ltd.), FS1265, SH200, SH5500, SC5540, SC5570, F-1, SD5590 (manufactured by Toray-Dow Coming Silicone Co., Ltd.), and anti-foaming agents containing a fluorine atom such as MEGAFAC F-142D, F-144D, F-178K, F-179, F-815 (manufactured by Dainippon Ink and Chemicals, Inc.).

Examples of leveling agents include Polyflow No. 7, No. 38, No. 50E, S, 75, No. 75, No. 77, No. 90, No. 95, No. 300, No. 460, ATF, and KL-245 (manufactured by Kyoeisha Chemical Co., Ltd.). The amount of these additives to be added may be optionally determined insofar as the object of the composition of the present invention is not adversely affected.

The viscosity of the composition of the present invention is preferably 10-10,000 mPa·s, still more preferably 50-5,000 mPa·s, and particularly preferably 150-2,000 mPa·s.

It is preferable to add each component so that the glass transition temperature of the resulting cured product falls in the range from -30 to 200°C, and preferably from 0 to 120°C. If the glass transition temperature is too low, the cured product may soften in summer or in a closed sunny room at high temperature, whereby a substrate may be dislodged or may move due to decreased adhesion. If the glass transition temperature is too high, adhesion may be insufficient or the substrate may break when dropped or bent.

The term "glass transition temperature" used herein means a temperature indicating a maximum value of the loss tangent (tanδ) measured using a dynamic viscoelasticity measurement device at an oscillation frequency of 10.

The compositions of the present invention are preferably cured by irradiating the composition with ultraviolet rays, visible rays, electron beams, or the like. For example, the composition of the present invention, applied between substrates so that the thickness of the adhesive layer is 10-100 µm, is easily cured by irradiating the composition using a metal halide lamp at a dose of 50-2000 mJ/cm², thereby causing the substrates to adhere.

The photocured product of the composition of the present invention preferably has excellent transparency. For example, a 60 µm thick layer of cured composition preferably has a light transmittance of 90% or more at 600-700 nm. If the light transmittance is less than 90%, the appearance of an optical disk may be impaired. Moreover, light to read the information stored in the disk is reduced by the adhesive layer of the cured product, thereby hindering read operations. Therefore, it is preferable to prepare the composition of the present invention by combining each component so that the light transmittance of the cured product is in the above range.

It is preferable to add each component so that the photocured product of the composition of the present invention has a refractive index of 1.51-1.70 at 25°C. If the refractive index of the photocured product is out of this range problems may occur when reading the information stored in the disk.

The composition of the present invention exhibits good adhesion to a wide variety of materials, including plastics such as polycarbonate (PC) and polymethylmethacrylate (PMMA), metals (e.g. gold, silver, and aluminum), and inorganic compounds (e.g. glass). Therefore, the composition is suitable as an adhesive for optical disks.

### Examples

The present invention will be described by examples, which should not be construed as limiting the present invention.

### Synthesis of urethane acrylate (component (A)):

### Synthesis Example 1

A 1-liter separable flask equipped with a stirrer and a thermometer was charged with 209 g isophorone diisocyanate, 0.2 g of 3,5-di-t-butyl-4-hydroxytoluene, and 0.8 g of di-n-butyltin dilaurate. The mixture was stirred and cooled to 10°C in a cold water bath in dry air. 109 g of 2-hydroxyethyl acrylate was added slowly at 10-35°C for one hour and allowed to react. After the addition of 305.5 g of polytetramethylene glycol with an average molecular weight of 650 ("PTMG 650" manufactured by Mitsubishi Chemical Corp.), the mixture was allowed to react at 40-60°C for 5 hours while stirring. The reaction product was removed to obtain urethane acrylate (A1) with a number average molecular weight of 1300.

### Synthesis Example 2

Urethane acrylate (A2) with a number average molecular weight of 1650 was obtained in the same manner as in Synthesis Example 1 except for using 480 g of polytetramethylene glycol with an average molecular weight of 1000 ("PTMG 1000" manufactured by Mitsubishi Chemical Corp.) instead of the polytetramethylene glycol used in Synthesis Example 1.

### Example 1

A reaction vessel equipped with a stirrer was charged with 40 g of the urethane acrylate (A1) synthesized in Synthesis Example 1, 20 g of 4-hydroxybutyl acrylate (C1) ("4HBA" manufactured by Osaka Organic Chemical Industry Co., Ltd.), 15 g of ethylene oxide addition bisphenol A diacrylate (F1) ("VR77" manufactured by Showa Highpolymer Co., Ltd.), 25 g of ethylene glycol diacrylate (F2) ("Light Acrylate 4EGA" manufactured by Kyoeisha Chemical Co., Ltd.), 3 g of 2,2-dimethoxy-1,2-diphenylethan-1-one ("Irgacure 651" manufactured by Ciba Specialty Chemicals Co., Ltd.), 3 g of 2-hydroxy-2-methyl-1-phenylpropan-1-one ("Darocur 1173" manufactured by Ciba Specialty Chemicals Co., Ltd.), 0.5 g of ethyl dimethylaminobenzoate ("KAYACURE EPA" manufactured by Nippon Kayaku Co., Ltd.), 1 g of γ-mercaptopropyltrimethoxysilane ("SH6062" manufactured by Toray-Dow Coming silicone Co., Ltd.), and 0.3 g of 2,2-thiodiethylene bis[3-(3,5-di-t-butyl-4-hydroxyphenyl)propionate] ("Irganox 1035" made of the Ciba Specialty Chemicals Co., Ltd.). The mixture was stirred at 50°C for one hour to obtain a composition of Example 1.

### Examples 2-9

Compositions for forming a coating film were prepared in Examples 2-9 in the same manner as in Example 1 except for changing the components. Each component shown in Table 1 is as follows. The amount of the components in Table 1 is indicated by parts by weight.

### Component (B)

B1: Ethyl p-dimethylaminobenzoate ("KAYACURE EPA" manufactured by Nippon Kayaku Co., Ltd.)
B2: Isoamyl dimethylaminobenzoate ("KAYACURE DMBI" manufactured by Nippon Kayaku Co., Ltd.)

### Component (C)

C1: 4-Hydroxybutyl acrylate ("4-HBA" manufactured by Osaka Organic Chemical Industry Co., Ltd.)

### Component (D)

D1: 2,2-Dimethoxy-1,2-diphenylethan-1-one ("Irgacure 651" manufactured by Ciba Specialty Chemicals Co., Ltd.)
D2: 2-Hydroxy-2-methyl-1-phenyl-propan-1-one ("Darocur 1173" manufactured by Ciba Specialty Chemicals Co., Ltd.)

### Component (E)

E1: γ-Mercaptopropyltrimethoxysilane (SH6062 manufactured by Toray-Dow Coming Silicone Co., Ltd.)

### Other components

Ethylene oxide addition bisphenol A di(meth)acrylate ("VR-77" manufactured by Showa Highpolymer Co., Ltd.)
Ethylene glycol diacrylate ("Light Acrylate 4EGA" manufactured by Kyoeisha Chemical Co., Ltd.)
Phenoxyethyl acrylate ("New Frontier PHE" manufactured by Daiichi Kogyo Seiyaku Co., Ltd.)
2-Methyl-1-[4-(methylthio)phenyl]-2-morpholino-propan-1-one ("Irgacure 907" manufactured by Ciba Specialty Chemicals Co., Ltd.)
2,2-Thio-diethylene bis[3-(3,5-di-t-butyl-4-hydroxyphenyl)propionate] ("Irganox 1035" manufactured by Ciba Specialty Chemicals Co., Ltd.)
Edge curability, moisture-heat resistance, and adhesion to substrates of the compositions thus prepared (compositions of Examples 1-9) were measured and evaluated as described below.

### (1) Edge curability

The composition was applied between a PC substrate and a gold substrate prepared by sputtering a PC substrate so that the thickness of the composition film was 50 µm. The composition was irradiated from either the PC substrate side or the gold substrate side using a conveyer-type metal halide lamp at a dose of 500 mJ/cm², thereby causing the substrates to adhere. In the case where tackiness (viscosity) was noted when a finger was placed at the edge of the disk thus obtained, edge curability of the composition was judged as "Bad". In the case where there was no tackiness, edge curability of the composition was judged as "Good". Edge curability of the composition which had no tackiness after irradiation at a dose of 250 mJ/cm² was judged as "Excellent".

### (2) Moisture-heat resistance

Substrates were caused to adhere by irradiating the composition at a dose of 500 mJ/cm² in the same manner as in the above (1). In the case where abnormalities such as foam or corrosion were observed in the adhesive layer or the interface between the adhesive and the substrates after allowing to stand in a thermo-hygrostat at a temperature of 90°C and a relative humidity of 98%RH, moisture-heat resistance of the composition was judged as "Bad". In the case where no abnormalities were observed, moisture-heat resistance of the composition was judged as "Good".

### (3) Adhesion to substrates

The composition was applied to an aluminum film or gold film evaporated onto a PC substrate using a sputtering method. The composition was irradiated at a dose of 100 mJ/cm² in a nitrogen atmosphere to obtain a cured film of the composition with a thickness of 50 µm. The cured film was then subjected to a cross-cut cellophane tape peeling test. In the case where the aluminum film or gold film was not removed from the PC substrate, adhesion of the composition was judged as "Good". When one or more squares were removed, adhesion of the composition was judged as "Bad".

Table 1 shows the evaluation results in the case of attaching a PC substrate and an aluminum substrate prepared by sputtering a PC substrate, and the case of attaching a PC substrate and a gold substrate prepared by sputtering a PC substrate. The composition of Example 7, which did not contain the component (B), exhibited relatively poor edge curability but good moisture-heat resistance. The compositions of Examples 8 and 9, which did not contain the component (C) and (D) in combination, exhibited relatively poor moisture-heat resistance but good edge curability. The composition of Example 6, which did not contain the component (E), exhibited relatively poor adhesion to gold.

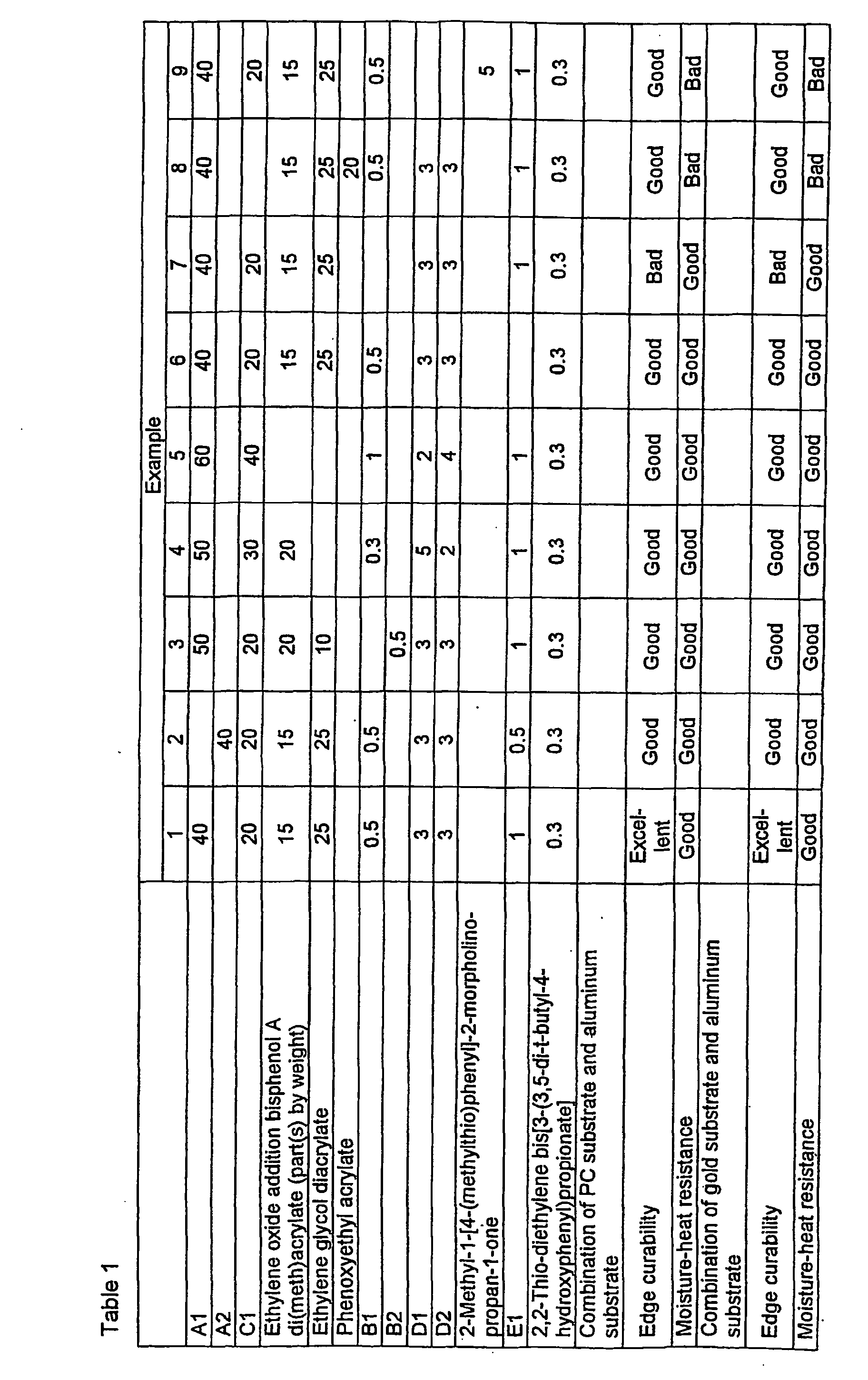

## Claims

1. A composition comprising:
(a) a radiation-curable oligomer;
(b) dialkylaminobenzoate; and
(d) a compound selected from the group consisting of 2,2-dimethoxy-1,2-diphenylethan-1-one, 2-hydroxy-2-methyl-1-phenylpropan-1-one, and 1-hydroxycyclohexyl phenyl ketone.

2. The composition of claim 1, wherein said composition comprises, relative to the total weight of the composition, 0.05-5 wt% of said dialkylaminobenzoate.

3. The composition according to any one of claims 1-2, further comprising a hydroxyalkyl (meth)acrylate.

4. The composition according to claim 3, wherein said composition comprises, relative to the total weight of the composition, 5-70 wt% of said hydroxyalkyl (meth)acrylate.

5. A composition comprising:
(a) a radiation-curable oligomer;
(c) a hydroxyalkyl (meth)acrylate; and
(d) a compound selected from the group consisting of 2,2-dimethoxy-1,2-diphenylethan-1-one, 2-hydroxy-2-methyl-1-phenylpropan-1-one, and 1-hydroxycyclohexyl phenyl ketone.

6. The composition according to any one of claims 1-5, wherein said composition comprises ethyl p-dimethylaminobenzoate.

7. The composition according to any one of claims 1-6, further comprising
(e) a thiol compound having a methoxysilyl group.

8. The composition of claim 7, wherein said composition comprises, relative to the total weight of the composition, 0.1-5 wt% of said thiol compound.

9. The composition according to any one of claims 1-8, wherein said radiation-curable oligomer is produced by reacting a polyol compound, a polyisocyanate compound, and a (meth)acrylate compound containing a hydroxyl group.

10. The composition according to claim 9, wherein said polyol compound has a number average molecular weight of 250-800.

11. The composition according to any one of claims 1-10, wherein said composition comprises, relative to the total weight of the composition, 20-80 wt% of said radiation-curable oligomer.

12. The composition according to any one of claims 1-11, wherein said composition comprises a hydroxy C₁-C₆ alkyl (meth)acrylate.

13. The composition according to any one of claims 1-12, wherein said composition comprises 4-hydroxybutyl (meth)acrylate.

14. The composition according to any one of claims 1-13, wherein said composition comprises 2,2-dimethoxy-1,2-diphenylethan-1-one and 2-hydroxy-2-methyl-1-phenylpropan-1-one.

15. The composition according to any one of claims 1-14, wherein a 60 µm thick layer of cured composition has a light transmittance of 90% or more at 600-700 nm.

16. The composition according to any one of claims 1-15, wherein said composition has a viscosity of 150-2,000 mPa·s.

17. Use of a composition according to any one of claims 1-16 as an adhesive for optical discs.

18. The use according to claim 17, wherein said optical disc is a digital versatile disc.

19. An optical disc comprising an adhesive, said adhesive being obtained by curing a composition according to any one of claims 1-16.

20. The optical disc of claim 19, wherein said optical disc is a digital versatile disc.

## Patentansprüche

1. Zusammensetzung, umfassend:
(a) ein durch Strahlung härtbares Oligomer,
(b) Dialkylaminobenzoat und,
(d) eine Verbindung, ausgewählt aus der Gruppe, bestehend aus 2,2-Dimethoxy-1,2-diphenylethan-1-on, 2-Hydroxy-2-methyl-1-phenylpropan-1-on und 1-Hydroxycyclohexylphenylketon.

2. Zusammensetzung gemäß Anspruch 1, wobei die Zusammensetzung, bezogen auf das Gesamtgewicht der Zusammensetzung, 0,05-5 Gew.-% des Dialkylaminobenzoats umfasst.

3. Zusammensetzung gemäß einem der Ansprüche 1-2, weiter umfassend ein Hydroxyalkyl(meth)acrylat.

4. Zusammensetzung gemäß Anspruch 3, wobei die Zusammensetzung, bezogen auf das Gesamtgewicht der Zusammensetzung, 5-70 Gew.-% des Hydroxyalkyl(meth)acrylats umfasst.

5. Zusammensetzung, umfassend:
(a) ein durch Strahlung härtbares Oligomer,
(c) ein Hydroxyalkyl(meth)acrylat und
(d) eine Verbindung, ausgewählt aus der Gruppe, bestehend aus 2,2-Dimethoxy-1,2-diphenylethan-1-on, 2-Hydroxy-2-methyl-1-phenylpropan-1-on und 1-Hydroxycyclohexylphenylketon.

6. Zusammensetzung gemäß einem der Ansprüche 1-5, wobei die Zusammensetzung Ethyl-p-dimethylaminobenzoat umfasst.

7. Zusammensetzung gemäß einem der Ansprüche 1-6, weiter umfassend
(e) eine Thiolverbindung mit einer Methoxysilylgruppe.

8. Zusammensetzung gemäß Anspruch 7, wobei die Zusammensetzung, bezogen auf das Gesamtgewicht der Zusammensetzung, 0,1-5 Gew.-% der Thiolverbindung umfasst.

9. Zusammensetzung gemäß einem der Ansprüche 1-8, wobei das durch Strahlung härtbare Oligomer durch Umsetzen einer Polyolverbindung, einer Polyisocyanatverbindung und einer (Meth)acrylatverbindung, enthaltend eine Hydroxylgruppe, erzeugt wird.

10. Zusammensetzung gemäß Anspruch 9, wobei die Polyolverbindung ein zahlenmittleres Molekulargewicht von 250-800 aufweist.

11. Zusammensetzung gemäß einem der Ansprüche 1-10, wobei die Zusammensetzung, bezogen auf das Gesamtgewicht der Zusammensetzung, 20-80 Gew.-% des durch Strahlung härtbaren Oligomers umfasst.

12. Zusammensetzung gemäß einem der Ansprüche 1-11, wobei die Zusammensetzung ein Hydroxy-C₁-C₆-Alkyl(meth)acrylat umfasst.

13. Zusammensetzung gemäß einem der Ansprüche 1-12, wobei die Zusammensetzung 4-Hydroxybutyl(meth)acrylat umfasst.

14. Zusammensetzung gemäß einem der Ansprüche 1-13, wobei die Zusammensetzung 2,2-Dimethoxy-1,2-diphenylethan-1-on und 2-Hydroxy-2-methyl-1-phenylpropan-1-on umfasst.

15. Zusammensetzung gemäß einem der Ansprüche 1-14, wobei eine 60 µm dicke Schicht der gehärteten Zusammensetzung eine Lichtdurchlässigkeit von 90% oder mehr bei 600-700 nm aufweist.

16. Zusammensetzung gemäß einem der Ansprüche 1-15, wobei die Zusammensetzung eine Viskosität von 150-2000 mPa·s aufweist.

17. Verwendung einer Zusammensetzung gemäß einem der Ansprüche 1-16 als ein Haftmittel für optische Scheiben.

18. Verwendung gemäß Anspruch 17, wobei die optische Scheibe eine Digital Versatile Disc ist.

19. Optische Scheibe, umfassend ein Haftmittel, wobei das Haftmittel durch Härten einer Zusammensetzung gemäß einem der Ansprüche 1-16 erhalten worden ist.

20. Optische Scheibe gemäß Anspruch 19, wobei die optische Scheibe eine Digital Versatile Disc ist.

## Revendications

1. Composition comprenant :
(a) un oligomère durcissable par rayonnement ;
(b) un dialkylaminobenzoate ; et
(c) un composé choisi dans le groupe constitué de la 2,2-diméthoxy-1,2-diphényléthan-1-one, 2-hydroxy-2-méthyl-1-phénylpropan-1-one et 1-hydroxycyclohexyl phényl cétone.

2. Composition selon la revendication 1, **caractérisée en ce que** ladite composition comprend, par rapport au poids total de la composition, 0,05 à 5 % en poids dudit dialkylaminobenzoate.

3. Composition selon l'une quelconque des revendications 1 et 2, comprenant en plus un hydroxyalkyl (méth)acrylate.

4. Composition selon la revendication 3, **caractérisée en ce que** ladite composition comprend, par rapport au poids total de la composition, 5 à 70 % en poids dudit hydroxyalkyl (méth)acrylate.

5. Composition comprenant :
(a) un oligomère durcissable par rayonnement ;
(c) un hydroxyalkyl (méth)acrylate ; et
(d) un composé choisi dans le groupe constitué de la 2,2-diméthoxy-1,2-diphényléthan-1-one, 2-hydroxy-2-méthyl-1-phénylpropan-1-one et 1-hydroxycyclohexyl phényl cétone.

6. Composition selon l'une quelconque des revendications 1 à 5, **caractérisée en ce que** ladite composition comprend du p-diméthylaminobenzoate d'éthyle.

7. Composition selon l'une quelconque des revendications 1 à 6, comprenant en plus
(e) un composé thiol ayant un groupe méthoxysilyle.

8. Composition selon la revendication 7, **caractérisée en ce que** ladite composition comprend, par rapport au poids total de la composition, 0,1 à 5 % en poids dudit composé thiol.

9. Composition selon l'une quelconque des revendications 1 à 8, **caractérisée en ce que** ledit oligomère durcissable par rayonnement est produit par réaction d'un composé polyol, d'un composé polyisocyanate et d'un composé (méth)acrylate contenant un groupe hydroxyle.

10. Composition selon la revendication 9, **caractérisée en ce que** ledit composé polyol a une masse moléculaire moyenne en nombre de 250-800.

11. Composition selon l'une quelconque des revendication 1 à 10, **caractérisée en ce que** ladite composition comprend, par rapport au poids total de la composition, 20 à 80 % en poids dudit oligomère durcissable par rayonnement.

12. Composition selon l'une quelconque des revendication 1 à 11, **caractérisée en ce que** ladite composition comprend un (méth)acrylate d'hydroxy alkyle en C₁-C₆.

13. Composition selon l'une quelconque des revendication 1 à 12, **caractérisée en ce que** ladite composition comprend du (méth)acrylate de 4-hydroxybutyle.

14. Composition selon l'une quelconque des revendication 1 à 13, **caractérisée en ce que** ladite composition comprend de la 2,2-diméthoxy-1,2-diphényléthan-1-one et de la 2-hydroxy-2-méthyl-1-phénylpropan-1-one.

15. Composition selon l'une quelconque des revendication 1 à 14, **caractérisée en ce qu'**une couche de la composition durcie, d'épaisseur 60 µm, a une transmission de la lumière égale ou supérieure à 90 % à 600 à 700 nm.

16. Composition selon l'une quelconque des revendication 1 à 15, **caractérisée en ce que** ladite composition a une viscosité de 150-2.000 mPa.s.

17. Utilisation d'une composition selon l'une quelconque des revendications 1 à 16 en tant qu'adhésif pour disques optiques.

18. Utilisation selon la revendication 17, **caractérisée en ce que** ledit disque optique est un disque DVD.

19. Disque optique comprenant un adhésif, ledit adhésif étant obtenu par durcissement d'une composition selon l'une quelconque des revendications 1 à 16.

20. Disque optique de la revendication 19, **caractérisé en ce que** ledit disque optique est un disque DVD.
